# EUROPÄISCHE PATENTSCHRIFT

(11) **EP 4 627 235 B1**
(45) Veröffentlichungstag und Bekanntmachung des Hinweises auf die Patenterteilung: **22.07.2026**
(21) Anmeldenummer: 23798198.0
(22) Anmeldetag: 26.10.2023
(51) Int. Cl.: F16J 15/34

(54) **GLEITRINGDICHTUNGSANORDNUNG**
SLIDE RING SEAL ARRANGEMENT
AGENCEMENT DE JOINT D'ÉTANCHÉITÉ À BAGUE COULISSANTE

(30) Priorität: 29.11.2022 DE 102022131503
(43) Veröffentlichungstag der Anmeldung: 08.10.2025
(73) Patentinhaber: EagleBurgmann Germany GmbH & Co. KG, 82515 Wolfratshausen (DE)
(72) Erfinder: LANG, Klaus, 82547 Eurasburg (DE); RANKL, Stephan, 82205 Gilching (DE)
(74) Vertreter: Hoefer & Partner Patentanwälte mbB
(86) Internationale Anmeldenummer: PCT/EP2023/079904
(87) Internationale Veröffentlichungsnummer: WO 2024/115020

(56) Entgegenhaltungen:
- DE-A1- 102016 210 202
- DE-T1- 19 581 720
- DE-U1- 7 631 330

## Beschreibung

Die vorliegende Erfindung betrifft eine Gleitringdichtungsanordnung mit einer signifikant verbesserten Möglichkeit einer Übertragung von Drehmoment von und auf Gleitringe, insbesondere keramische Gleitringe.

Gleitringdichtungsanordnungen sind aus dem Stand der Technik in unterschiedlichen Ausgestaltungen bekannt. Ein Problemkreis ist dabei ein Anfahren der Gleitringdichtung aus einer Stillstandssituation unter hohem Druck des abzudichtenden Mediums. Im Stillstand der Gleitringdichtungsanordnung werden die Gleitringe üblicherweise mittels Federmitteln und dem Druck des Mediums gegeneinander gedrückt, um möglichst eine Abdichtung am Dichtspalt zwischen den Gleitflächen der Gleitringe sicherzustellen. Tendenziell gilt hierbei, dass die Abdichtung umso besser ist, je höher die axiale Vorspannkraft auf die Gleitringe ist. Dies führt allerdings dann beim Anfahren der Gleitringdichtungsanordnung aus dem Stillstand zu Problemen, da hier ein sehr hohes Drehmoment, welches von der anlaufenden Welle über beispielsweise einen Gleitringträger auf den rotierenden Gleitring übertragen wird, auftritt. In gleicher Weise tritt aufgrund des Kontakts im Stillstand beim Anfahren der Gleitringdichtungsanordnung auch ein sehr hohes Drehmoment am stationären Gleitring auf, welcher durch einen stationären Gleitringträger oder ein Gehäuse ortsfest gehalten wird. Dieselbe Problematik tritt auch bei Gleitringdichtungen zur Abdichtung von Medien insbesondere bei hohen Drücken, beispielsweise bei Pumpen oder Rührwerksdichtungen auf, da die Gleitringe im Stillstandszustand zusätzlich durch den hohen Druck belastet werden und gegeneinander gedrückt werden. Zur Übertragung von Drehmoment zwischen Gleitringträger und Gleitring werden beispielsweise eingepresste Stifte verwendet. Dies ist jedoch bei keramischen Gleitringen aufgrund der Sprödigkeit des Materials der Gleitringe nicht möglich. Bekannt sind auch Schrumpfverbindungen zwischen Gleitringträger und Gleitring, wodurch jedoch unerwünscht hohe Spannungen in den Gleitring eingebracht werden können, welche zu Rissen im Gleitringmaterial und möglicherweise unerwünscht kurzer Lebensdauer der Gleitringe führen kann. Insbesondere bei Rührwerksdichtungen müssen häufig noch zusätzliche sog. Stillstandsdichtungen verwendet werden, um die Dichtheit der Gleitringdichtungsanordnung im Stillstand zu gewährleisten.

Die DE 10 2016 210 202 A1 und die DE 195 81 720 T1 offenbaren Gleitringdichtungsanordnungen gemäß dem Oberbegriff der unabhängigen Ansprüche.

Die DE 76 31 330 U1 offenbart eine Gleitringdichtung für Kohleringe mit elastischen Drehmomentübertragungselementen.

Es ist daher Aufgabe der vorliegenden Erfindung, eine Gleitringdichtungsanordnung bereitzustellen, welche bei einfachem Aufbau und einfacher, kostengünstiger Herstellbarkeit eine Verbesserung einer Übertragung von Drehmoment zwischen Gleitringen und Gleitringträgern sowohl bei rotierenden als auch bei stationären Gleitringen ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass eine deutliche Verbesserung einer Übertragung von Drehmoment zwischen Gleitringträger und Gleitring bzw. Gleitring und Gleitringträger möglich ist. Insbesondere können Beschädigungen der Gleitringe durch übermäßig große Drehmomente vermieden werden. Weiterhin sind auch keine zusätzlichen Stillstandsdichtungen notwendig. Weiterhin kann erfindungsgemäß eine sehr schonende Drehmomenteinleitung zwischen den drehmomentübertragenden Bauteilen ermöglicht werden. Weiterhin kann ein Krafteinleitungspunkt K gezielt ausgewählt werden, wobei insbesondere eine Richtung der Kraft und/oder eine Stärke der eingeleiteten Kraft definiert werden kann.

Dies wird erfindungsgemäß dadurch erreicht, dass die Gleitringdichtungsanordnung eine Gleitringdichtung umfasst, welche einen rotierenden Gleitring mit einer ersten Gleitfläche und einen stationären Gleitring mit einer zweiten Gleitfläche aufweist, wobei zwischen den Gleitflächen ein Dichtspalt definiert ist. Ferner umfasst die Gleitringdichtungsanordnung eine Drehmomentvorrichtung zur Einleitung eines Drehmoments in und/oder aus wenigstens einem der Gleitringe. Die Drehmomentvorrichtung weist dabei eine Vielzahl von Übertragungselementen auf, welche Drehmoment zwischen einem Gleitringträger und dem Gleitring übertragen. Drehmoment kann dabei in beiden Richtungen, d.h., vom Gleitringträger in den Gleitring oder vom Gleitring in den Gleitringträger übertragen werden. Die Drehmomentübertragung erfolgt dabei derart, dass ein Gesamtdrehmoment auf die Vielzahl der einzelnen Übertragungselemente aufgeteilt wird. Der Gleitringträger weist dabei erste Aufnahmeöffnungen mit im Schnitt bogenförmigem Querschnitt auf. Der Gleitring weist zweite Aufnahmeöffnungen mit im Schnitt bogenförmigen Querschnitt auf. Die ersten und zweiten Aufnahmeöffnungen sind vorzugsweise im Schnitt halbkreisförmig. Ferner sind die Übertragungselemente in der ersten und zweiten Aufnahmeöffnung gleichzeitig angeordnet und befinden sich in Kontakt mit dem Gleitringträger und dem Gleitring. Hierbei ist keine Presspassung zwischen den Übertragungselementen und der ersten und zweiten Aufnahmeöffnung ausgebildet. Da eine Vielzahl von Übertragungselementen vorgesehen ist, und alle Übertragungselemente an der Drehmomentübertragung teilhaben, ergibt sich eine deutliche Reduzierung einer jeweiligen Größe eines übertragenen Drehmoments entsprechend der Anzahl der Übertragungselemente bei einem gegebenen Maximaldrehmoment. Auch können Spannungen an den Kontaktbereichen der Drehmomentvorrichtung reduziert werden.

Ferner sind die Übertragungselemente Wälzkörper, welche eingerichtet sind, zwischen dem Gleitringträger und dem Gleitring bei Drehmomentübertragung einen Abrollvorgang auszuführen. Der Abrollvorgang ist im Betrieb relativ klein und wird nur über einen kleinen Drehwinkel, vorzugsweise kleiner 2°, insbesondere kleiner 1°, ausgeführt.

Die Wälzkörper sind vorzugsweise Zylinder. Weiter bevorzugt sind alle Wälzkörper gleich ausgebildet. Die Zylinder sind dabei mit ihrer Zylinderachse parallel zur Mittelachse der Gleitringdichtung angeordnet. Dadurch ist eine Abrollbewegung in Umfangsrichtung der Gleitringe möglich, was zu einer Variation des Krafteinleitungspunkts K zwischen den drehmomentübertragenden Bauteilen führt. Mittels der Wälzkörper kann insbesondere der Krafteinleitungspunkt weg von einem Außendurchmesser des Gleitrings und somit weg von einer fragilen Kante an den Aufnahmeöffnungen, welche am Außenumfang des Gleitrings vorgesehen sind, gebracht werden. Hierdurch können Spannungsspitzen, welche möglicherweise zu Abplatzern am Material des Gleitrings, insbesondere im Bereich der Kante der Aufnahmeöffnungen führen können, vermieden werden. Dies ist insbesondere bei Verwendung von keramischen Gleitringen sehr vorteilhaft.

Weiter bevorzugt ist ein erster Radius R1 der Wälzkörper kleiner als ein zweiter Radius R2 der ersten Aufnahmeöffnungen im Gleitringträger und/oder der erste Radius R1 der Wälzkörper ist kleiner als ein dritter Radius R3 der zweiten Aufnahmeöffnungen im Gleitring. D.h., im Berührungspunkt ist der erste Radius R1 immer kleiner oder gleich dem zweiten Radius R2 und/oder dem dritten Radius R3. Dadurch kann eine Kraftrichtung, welche bei der Übertragung von Drehmoment auf das das Drehmoment aufnehmende Bauteil wirkt, eingestellt werden. Insbesondere kann der Krafteinleitungspunkt K weg von einem Außenumfang des Gleitrings, an dem die Kante der zweiten Aufnahmeöffnung liegt, gebracht werden. Darüber hinaus ist es bei einem Anfahren der Gleitringdichtungsanordnung aus einer Stillstandssituation möglich, dass durch die Wahl der unterschiedlichen Radien der Wälzkörper und der Aufnahmeöffnungen beim Anfahren eine kurzzeitige Gleitflächendeformation in einem Bereich zwischen zwei benachbarten Wälzkörpern auftritt. Dies ermöglicht es, insbesondere bei hohen Drücken, dass das unter Druck stehende abzudichtende Medium in diese Gleitflächendeformation kurzzeitig einströmt und ein Abheben der Gleitringe unterstützt. Durch die Wahl des Krafteinleitungspunkts K kann somit gezielt für den Anfahrvorgang der Gleitringdichtungsanordnung eine gewisse Welligkeit an der Gleitfläche, insbesondere an der druckbelasteten Seite, insbesondere des Außenumfangs des Gleitrings, erreicht werden, welche in Axialrichtung an der Gleitfläche zu zurückgezogenen Tälern im Bereich der Wälzkörper und zu vorstehenden Bäuchen im Bereich zwischen den Wälzkörpern führt, so dass das Medium kurzzeitig in den Dichtspalt einströmen kann und ein Abheben der Gleitflächen beim Anfahrvorgang unterstützt.

Vorzugsweise sind die Radien R2 und R3 der zweiten und dritten Aufnahmeöffnung gleich groß.

Weiter bevorzugt umfassen die Übertragungselemente in einer alternativen Ausgestaltung gemäß Anspruch 5 der Erfindung einen ersten und einen zweiten Körper, welche mittels einer Verbindungsvorrichtung miteinander verbunden sind. Der erste Körper weist eine bogenförmige erste Kontaktfläche für einen Kontakt mit der ersten Aufnahmeöffnung im Gleitringträger auf und der zweite Körper weist eine bogenförmige zweite Kontaktfläche für einen Kontakt mit der zweiten Aufnahmeöffnung im Gleitring auf.

Vorzugsweise umfasst die Verbindungsvorrichtung zwischen dem ersten und zweiten Körper einen oder mehrere Stäbe. Dadurch sind der erste und zweite Körper nur an Teilbereichen miteinander verbunden, so dass eine gewisse Elastizität der derart gestalteten Übertragungselemente vorhanden ist. Besonders bevorzugt sind die Stäbe und/oder der erste und zweite Körper aus einem Material mit einer größeren Elastizität als der Gleitring und der Gleitringträger hergestellt. Weiter bevorzugt umfasst die Verbindungsvorrichtung eine fachwerkartige Verbindung, die insbesondere in Radialrichtung steif ist.

Der erste Körper und/oder der zweite Körper sind vorzugsweise stabförmige Bauteile, insbesondere mit einem Ellipsenquerschnitt. Alternativ ist es auch möglich, dass der erste und zweite Körper als Zylinder, vorzugsweise mit unterschiedlichen Durchmessern, ausgebildet sind.

Weiter bevorzugt weisen der erste und der zweite Körper unterschiedliche Querschnitte auf.

Weiter bevorzugt sind die erste und zweite Aufnahmeöffnung in einem N-Eck angeordnet, wobei N eine ganze Zahl ist. Besonders bevorzugt ist N = 6, wobei die drehmomenteinleitenden Positionen gleich verteilt entlang des Umfangs des Gleitrings vorgesehen sind. Die Drehmomentübertrag auf und vom Gleitring erfolgt vorzugsweise am Außenumfang des Gleitrings.

Weiter bevorzugt sind Drehmomentvorrichtungen zur Drehmomentübertragung sowohl am rotierenden Gleitring als auch am stationären Gleitring vorgesehen. Die Drehmomentvorrichtungen am rotierenden und stationären Gleitring weisen vorzugsweise die gleiche geometrische Gestalt auf.

Weiterhin ergibt sich, insbesondere beim Anfahren der Maschine und somit zum Beginn der Rotation der Welle, zwischen dem stationären Gleitring 4 und dem zweiten Gleitringträger 41 ein Abstützdrehmoment M2, welches ebenfalls durch eine Drehmomentvorrichtung 6 zwischen diesen beiden Bauteilen übertragen werden muss.

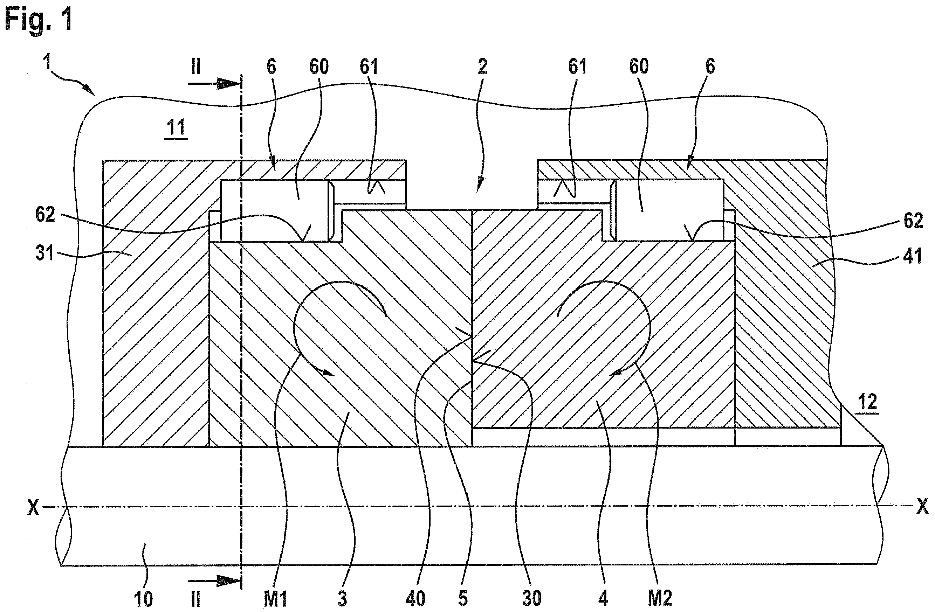

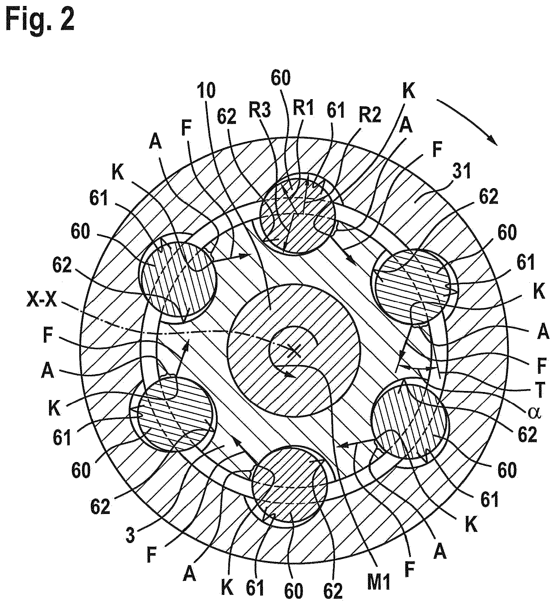

Die Drehmomentvorrichtung 6 zwischen dem rotierenden Gleitring 3 und dem ersten Gleitringträger 31 ist im Detail aus den Fig. 1 und 2 ersichtlich. Die Drehmomentvorrichtung 6 umfasst eine Vielzahl von Übertragungselementen 60, welche in diesem Ausführungsbeispiel zylindrische Wälzkörper sind. Wie aus Fig. 2 ersichtlich ist, sind insgesamt sechs Wälzkörper entlang des Umfangs gleich verteilt zwischen dem rotierenden Gleitring 3 und dem ersten Gleitringträger 31 angeordnet.

Die Übertragungselemente 61 sind eingerichtet, Drehmoment zwischen dem ersten Gleitringträger 31 und dem rotierenden Gleitring 3 zu übertragen. Dabei wird das gesamte Drehmoment M1 auf die Vielzahl der einzelnen Übertragungselemente 61 mit gleicher Größe aufgeteilt.

Wie aus den Fig. 1 und 2 weiter ersichtlich ist, sind im ersten Gleitringträger 31 erste Aufnahmeöffnungen 61 mit im Schnitt bogenförmigem Querschnitt ausgebildet. Im rotierenden Gleitring 3 sind zweite Aufnahmeöffnungen 62 mit im Schnitt bogenförmigem Querschnitt ausgebildet. Die Übertragungselemente 60 sind dabei sowohl in der ersten und zweiten Aufnahmeöffnung 61, 62 angeordnet.

Wie weiter aus Fig. 2 ersichtlich ist, weist das zylinderförmige Übertragungselement 60 einen ersten Radius R1 auf, die erste Aufnahmeöffnung 61 im ersten Gleitringträger 31 einen zweiten Radius R2 auf und die zweite Aufnahmeöffnung 62 im rotierenden Gleitring 3 einen dritten Radius R3 auf. Hierbei ist der erste Radius R1 kleiner als der zweite Radius R2 und kleiner als der dritte Radius R3. Weiterhin sind der zweite Radius R2 und der dritte Radius R3 gleich groß.

Wie aus Fig. 1 ersichtlich ist, ergibt sich durch die Wahl der drei Radien R1, R2, R3 bei einem Anfahren der Gleitringdichtungsanordnung aus der Ruheposition eine Abwälzbewegung der Übertragungselemente 60 in der ersten und zweiten Aufnahmeöffnung 61, 62. Durch die Wahl der Größe der Radien R1, R2, R3 kann dabei ein Krafteinleitungspunkt K definiert werden. Da der erste Radius R1 kleiner ist als die beiden Radien R2 und R3, ergibt sich der Krafteinleitungspunkt K, welcher mit einem Abstand A entfernt von einem Rand der zweiten Aufnahmeöffnung 62 im rotierenden Gleitring 3 liegt. Somit wird verhindert, dass die insbesondere beim Anlaufvorgang der Gleitringdichtungsanordnung auftretenden Kräfte F am Rand der zweiten Aufnahmeöffnung 62 liegen, so dass Abplatzungen oder eine Rissbildung an diesem empfindlichen Bereich des Gleitrings vermieden werden können. Somit kann der Krafteinleitungspunkt K weg vom äußeren Umfang des Gleitrings platziert werden und so Spannungsspitzen, welche zu Abplatzern oder dgl. am Gleitring führen könnten, vermieden werden.

Weiterhin stellt die Ausbildung der Übertragungselemente 60 als Wälzkörper sicher, dass beim Anfahrvorgang ein kurzer Abrollvorgang der Übertragungselemente 60 aus der Ruheposition auftritt, so dass eine gleichverteilte und damit geschmeidige Einleitung des Drehmoments vom ersten Gleitringträger 31 auf den rotierenden Gleitring 3 erfolgt.

Weiterhin kann durch Einstellen der Kraftrichtung der Kraft F zu einer Tangente T mit einem Winkel α beim Anfahrvorgang durch das Drehmoment M1 eine zusätzliche Radialkraft an jeder ersten Aufnahmeöffnung 61 bereitgestellt werden. Hierdurch kann gezielt eine kurzfristige drehmomentaktive Gleitflächendeformation der Gleitfläche 30 des rotierenden Gleitrings, insbesondere am äußeren Umfang des rotierenden Gleitrings bereitgestellt werden, so dass eine gewisse Welligkeit beim Anfahrvorgang der Gleitfläche 30 vorhanden ist. Hierdurch kann ein kurzfristiges Eindringen von Medium aus dem Produktbereich 11 unter hohem Druck in den Dichtspalt 5 provoziert werden, welches zusätzlich zum Anfahrdrehmoment einen Beitrag zum Losbrechen der Gleitflächen voneinander aus dem Ruhezustand bringt, um möglichst schnell den Dichtspalt 5 zwischen den Gleitflächen 30, 40 auszubilden. Da dieser Vorgang nur sehr kurzfristig auftritt, ergibt sich in der Regel kein Durchtritt des Mediums aus dem Druckbereich 11 durch den sich bildenden Dichtspalt 5 in Richtung um Atmosphärenbereich 12. Nach Überwinden des Losbrechmoments sinkt sofort das Drehmoment zwischen dem ersten Gleitringträger 31 und dem rotierenden Gleitring 3, so dass sich die Gleitflächen wieder sofort einglätten.

Da sich die gleiche Gleitflächendeformation an der zweiten Gleitfläche 40 des stationären Gleitrings 4 beim Anfahrvorgang zur Überwindung des Losbrechmoments ergibt, tritt die kurzfristige Welligkeit an beiden Gleitflächen auf und verschwindet sofort wieder, nachdem das Losbrechmoment überwunden ist. Somit hat diese Ausgestaltung der Gleitringdichtungsanordnung insbesondere bei sehr hohen Drücken im Produktbereich 11 große Vorteile.

Weiterhin sind die Übertragungselemente 60 der Drehmomentvorrichtung 6 am stationären Gleitring 4 zwischen dem stationären Gleitring 4 und dem zweiten Gleitringträger 41 gleich wie am rotierenden Gleitring ausgebildet. Hierbei wirkt zwischen dem stationären Gleitring 4 und dem zweiten Gleitringträger 41 beim Anfahrvorgang ein entsprechendes Gegendrehmoment M2, da beim Anfahrvorgang der sich mit dem stationären Gleitring 4 in Kontakt befindliche rotierende Gleitring 3 versucht, den stationären Gleitring 4 in Drehung zu versetzen. Dabei stützt sich dann der stationäre Gleitring 4 über die Übertragungselemente 60 am zweiten Gleitringträger 41 ab und es wird das Gegendrehmoment M2 am stationären Gleitring 4 erzeugt.

Die Anzahl der Übertragungselemente 60 am rotierenden Gleitring 3 und am stationären Gleitring 4 sind vorzugsweise gleich.

Die Erfindung bietet dabei eine Lösung, welche bei Gleitringdichtung insbesondere zum Zeitpunkt des Drehbeginns am Anfahrzeitpunkt einer Maschine auftritt. Insbesondere ermöglicht die Erfindung uneingeschränkt die Verwendung keramischer Gleitringe sowohl als rotierender Gleitring als auch als stationärer Gleitring. Im Stand der Technik wurde bisher ein erheblicher Aufwand durch Schrumpfsitze, Bandagen oder Gleitringmaterialien mit geringer Sprödigkeit, betrieben, um diese gefährliche Situation beim Anfahren der Gleitringdichtung zu entschärfen. Weiterhin ermöglicht die Gleitringdichtung der Erfindung es ferner, dass eine Auslegung der Gleitringdichtungsanordnung derart, dass beim Stillstand der Gleitringdichtung ein kritischer Betriebszustand mit einer definierten Restleckage durch einen minimalen Spalt zwischen den Gleitringen, um Losbrechmomente möglichst klein zu halten, nicht notwendig ist.

Weiterhin ermöglicht die Erfindung die Verwendung keramischer Materialien für den stationären und rotierenden Gleitring ohne Beschichtung, da die Anfahrdrehmomente der erfindungsgemäßen Gleitringdichtungsanordnung deutlich reduziert werden können. Im Stand der Technik werden häufig Diamantbeschichtungen verwendet, um eine Lebensdauer der Gleitringe bei häufigen Start-Stopp-Situationen mit entsprechenden hohen Drehmomenten beim Anfahren zu ermöglichen. Die Erfindung ermöglicht den Verzicht derartiger teurer Diamantbeschichtungen oder dgl.

Somit ermöglicht die Gleitringdichtung 1 eine deutliche Reduzierung eines Losbrechmoments der Gleitringdichtung 2 bei einem Anfahrvorgang. Die zylindrischen Übertragungselemente 60 sind dabei vorzugsweise aus Metall hergestellt und der rotierende Gleitring 3 und der stationäre Gleitring 4 aus einem keramischen Material, insbesondere SiC.

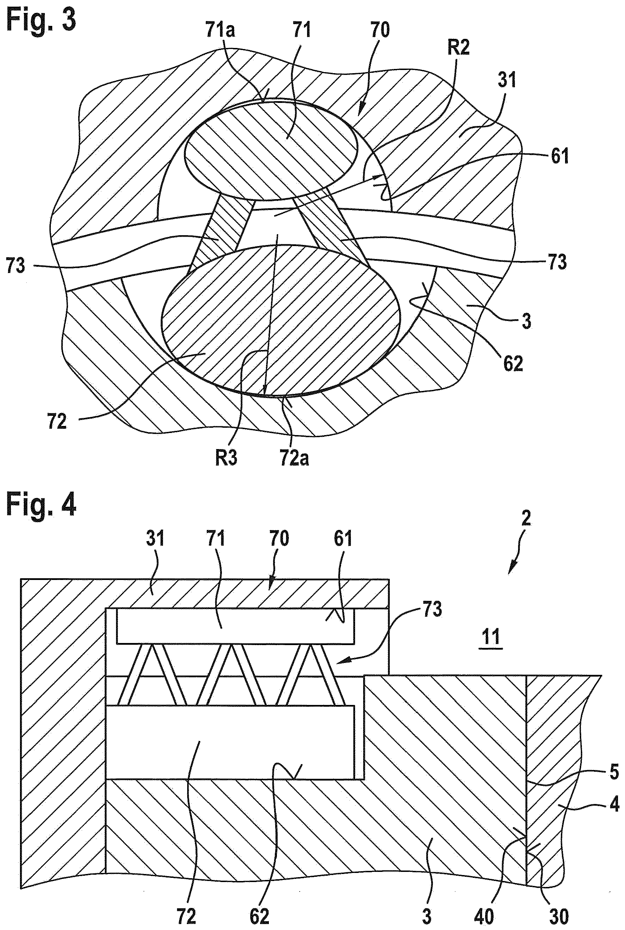

Die Fig. 3 und 4 zeigen eine Gleitringdichtungsanordnung 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Das zweite Ausführungsbeispiel entspricht im Wesentlichen dem ersten Ausführungsbeispiel, wobei im Unterschied zum ersten Ausführungsbeispiel beim zweiten Ausführungsbeispiel die Übertragungselemente 70 unterschiedlich ausgebildet sind. Beim zweiten Ausführungsbeispiel sind die Übertragungselemente 70 derart ausgebildet, dass die Übertragungselemente 70 einen ersten Körper 71 und einen zweiten Körper 72 sowie eine Verbindungsvorrichtung 73 aufweisen. Der erste Körper 71 weist eine gebogene erste Kontaktfläche 71a für einen Kontakt mit der ersten Aufnahmeöffnung 61 im ersten Gleitringträger 31 auf. Der zweite Körper 72 weist eine zweite bogenförmige Kontaktfläche 72a für einen Kontakt mit der zweiten Aufnahmeöffnung 62 im rotierenden Gleitring 3 auf.

Wie aus Fig. 3 ersichtlich ist, weist der erste Körper 71 einen kleineren Querschnitt als der zweite Körper 72 auf. Dabei weist der erste Körper 71 einen elliptischen Querschnitt auf und der zweite Körper 72 weist ebenfalls einen elliptischen Querschnitt auf. Die Verbindungsvorrichtung 73 umfasst eine Vielzahl von Stäben (vgl. Fig. 4), welche eine Verbindung zwischen dem ersten Körper 71 und dem zweiten Körper 72 herstellen. Die Stäbe der Verbindungsvorrichtung 73 weisen eine größere Elastizität als der erste Körper 71 und der zweite Körper 72 auf. Hierdurch wird beim Anfahrvorgang der Gleitringdichtungsanordnung erreicht, dass eine sanfte Drehmomenteinleitung vom ersten Gleitringträger 31 auf den rotierenden Gleitring 3 erfolgt. Der erste und zweite Körper 71, 72 sind stabförmige Bauteile, welche in Axialrichtung X-X der Gleitringdichtung verlaufen. Die Verbindungsvorrichtung 73 mit der Vielzahl von Stäben verläuft in radialer Richtung der Gleitringdichtungsanordnung.

Wie weiter aus Fig. 3 ersichtlich ist, ist ein Radius R2 der ersten Aufnahmeöffnung 61 kleiner als ein Radius R3 der zweiten Aufnahmeöffnung 62. Die Querschnitte der ellipsenförmigen ersten und zweiten Körper 71, 72 sind dabei an die Radien R2 und R3 angepasst. Somit erfolgt beim Anfahrvorgang über einen kleinen Drehwinkel, vorzugsweise kleiner 5°, ein Abrollvorgang zwischen den Kontaktflächen der Aufnahmeöffnungen 61, 62 und dem ersten und zweiten Körper 71, 72. Wie im ersten Ausführungsbeispiel sind entlang des Umfangs des rotierenden Gleitrings 3 eine Vielzahl von Übertragungselementen 70, welche vorzugsweise alle gleich ausgebildet sind, vorgesehen. In gleicher Weise können derartige Übertragungselemente 70 selbstverständlich auch zwischen dem stationären Gleitring 4 und dem zweiten Gleitringträger 41 vorgesehen werden. Ansonsten entspricht dieses Ausführungsbeispiel dem ersten Ausführungsbeispiel, so dass auf die dort gegebene Beschreibung verwiesen werden kann.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6: Drehmomentvorrichtung
- 10: Welle
- 11: Produktbereich
- 12: Atmosphärenbereich
- 30: Gleitfläche
- 31: erster Gleitringträger
- 40: Gleitfläche
- 41: zweiter Gleitringträger
- 60: Übertragungselemente / Wälzkörper
- 61: erste Aufnahmeöffnung im Gleitringträger
- 62: zweite Aufnahmeöffnung im Gleitring
- 70: Übertragungselemente
- 71: erster Körper
- 71a: erste Kontaktfläche
- 72: zweiter Körper
- 72a: zweite Kontaktfläche
- 73: Verbindungsvorrichtung / Stäbe
- A: Abstand
- F: Kraft
- K: Krafteinleitungspunkt
- M1: Drehmoment am rotierenden Gleitring
- M2: Gegendrehmoment am stationären Gleitring
- R1: erster Radius der Wälzkörper
- R2: zweiter Radius der ersten Aufnahmeöffnung
- R3: dritter Radus der zweiten Aufnahmeöffnung
- T: Tangente
- α: Winkel

## Patentansprüche

1. Gleitringdichtungsanordnung, umfassend:
- eine Gleitringdichtung (2) mit einem rotierenden Gleitring (3) mit einer ersten Gleitfläche (30) und einem stationären Gleitring (4) mit einer zweiten Gleitfläche (40), wobei zwischen den Gleitflächen (30, 40) ein Dichtspalt (5) definiert ist,
- eine Drehmomentvorrichtung (6) zur Übertragung eines Drehmoments zwischen einem der Gleitringe und einem Gleitringträger (31, 41),
- wobei die Drehmomentvorrichtung (6) eine Vielzahl von Übertragungselementen (60, 70) aufweist, welche eingerichtet sind, Drehmoment zwischen dem Gleitringträger (31, 41) und dem Gleitring zu übertragen, derart, dass ein Gesamtdrehmoment auf die Vielzahl von Übertragungselementen (60, 70) aufgeteilt wird,
- wobei der Gleitringträger (31, 41) erste Aufnahmeöffnungen (61) mit im Schnitt bogenförmigem Querschnitt aufweist und der Gleitring zweite Aufnahmeöffnungen (62) mit im Schnitt bogenförmigem Querschnitt aufweist, und
- wobei die Übertragungselemente (60, 70) in der ersten und zweiten Aufnahmeöffnung (61, 62) angeordnet sind,
**dadurch gekennzeichnet, dass** die Übertragungselemente (60) Wälzkörper sind, welche eingerichtet sind, zwischen dem Gleitringträger (31, 41) und dem Gleitring bei Drehmomentübertragung einen Abrollvorgang auszuführen.

2. Gleitringdichtungsanordnung nach Anspruch 1, wobei die Wälzkörper Zylinder sind.

3. Gleitringdichtungsanordnung nach Anspruch 1 oder 2, wobei ein erster Radius R1 des Zylinders kleiner ist als ein zweiter Radius R2 der ersten Aufnahmeöffnung (61) im Gleitringträger und/oder wobei der erste Radius R1 des Zylinders kleiner ist als ein dritter Radius R3 der zweiten Aufnahmeöffnung (62) im Gleitring.

4. Gleitringdichtungsanordnung nach Anspruch 3, wobei der zweite Radius R2 gleich groß ist wie der dritte Radius R3.

5. Gleitringdichtungsanordnung , umfassend:
- eine Gleitringdichtung (2) mit einem rotierenden Gleitring (3) mit einer ersten Gleitfläche (30) und einem stationären Gleitring (4) mit einer zweiten Gleitfläche (40), wobei zwischen den Gleitflächen (30, 40) ein Dichtspalt (5) definiert ist,
- eine Drehmomentvorrichtung (6) zur Übertragung eines Drehmoments zwischen einem der Gleitringe und einem Gleitringträger (31, 41),
- wobei die Drehmomentvorrichtung (6) eine Vielzahl von Übertragungselementen (60, 70) aufweist, welche eingerichtet sind, Drehmoment zwischen dem Gleitringträger (31, 41) und dem Gleitring zu übertragen, derart, dass ein Gesamtdrehmoment auf die Vielzahl von Übertragungselementen (60, 70) aufgeteilt wird,
- wobei der Gleitringträger (31, 41) erste Aufnahmeöffnungen (61) mit im Schnitt bogenförmigem Querschnitt aufweist und der Gleitring zweite Aufnahmeöffnungen (62) mit im Schnitt bogenförmigem Querschnitt aufweist, und
- wobei die Übertragungselemente (60, 70) in der ersten und zweiten Aufnahmeöffnung (61, 62) angeordnet sind.
**dadurch gekennzeichnet, dass** die Übertragungselemente (70) einen ersten Körper (71), einen zweiten Körper (72) und eine Verbindungsvorrichtung (73), welche den ersten Körper (71) mit dem zweiten Körper (72) verbindet, umfassen, wobei der erste Körper (71) eine bogenförmige erste Kontaktfläche für einen Kontakt mit der ersten Aufnahmeöffnung (61) im Gleitringträger (31, 41) aufweist und der zweite Körper (72) eine zweite bogenförmige Kontaktfläche für einen Kontakt mit der zweiten Aufnahmeöffnung (62) im Gleitring aufweist.

6. Gleitringdichtungsanordnung nach Anspruch 5, wobei die Verbindungsvorrichtung einen oder mehrere im Wesentlichen in Radialrichtung verlaufende Stäbe (73) und/oder eine fachwerkartige Verbindung umfasst.

7. Gleitringdichtungsanordnung nach Anspruch 5 oder 6, wobei die Verbindungsvorrichtung eine größere Elastizität aufweist als der erste Körper (71) und der zweite Körper (72).

8. Gleitringdichtungsanordnung nach einem der Ansprüche 5 bis 7, wobei der erste Körper (71) und/oder der zweite Körper (72) ein stabförmiges Bauteil mit einem Ellipsenquerschnitt ist.

9. Gleitringdichtungsanordnung nach einem der vorhergehenden Ansprüche, wobei eine Drehmomentvorrichtung (6) sowohl am rotierenden Gleitring (3) als auch am stationären Gleitring (4) zur Übertragung von Drehmoment von den Gleitringen auf Gleitringträger (31, 41) angeordnet ist.

10. Gleitringdichtungsanordnung nach einem der vorhergehenden Ansprüche, wobei die Drehmomentvorrichtung (6) derart in der ersten Aufnahmeöffnung (61) und der zweiten Aufnahmeöffnung (62) angeordnet ist, dass ein Krafteinleitungspunkt K einen Abstand A von einem Rand der ersten und zweiten Aufnahmeöffnung (61, 62) aufweist.

11. Gleitringdichtungsanordnung nach einem der vorhergehenden Ansprüche, wobei der rotierende Gleitring (3) und/oder der stationäre Gleitring (4) aus keramischem Material hergestellt sind und/oder wobei der rotierende Gleitring und der stationäre Gleitring (4) keine Beschichtung an der Gleitfläche (30, 40) aufweisen.

12. Gleitringdichtungsanordnung nach einem der vorhergehenden Ansprüche,
- wobei zwischen den Übertragungselementen (60, 70) und der ersten Aufnahmeöffnung (61) und der zweiten Aufnahmeöffnung (62) ein Linienkontakt vorhanden ist.

## Claims

1. Mechanical seal arrangement, comprising:
- a mechanical seal (2) having a rotating slide ring (3) having a first sliding surface (30) and a stationary slide ring (4) having a second sliding surface (40), wherein a sealing gap (5) is defined between the sliding surfaces (30, 40),
- a torque device (6) for transmitting a torque between one of the slide rings and a slide ring carrier (31, 41),
- wherein the torque device (6) comprises a plurality of transmission elements (60, 70) which are configured for transmitting torque between the slide ring carrier (31, 41) and the slide ring such that a total torque is divided over the plurality of transmission elements (60, 70),
- wherein the slide ring carrier (31, 41) comprises first receiving openings (61) having a cross-section that is curved and the slide ring comprises second receiving openings (62) which have a cross-section that is curved, and
- wherein the transmission elements (60, 70) are arranged in the first and second receiving opening (61, 62),
**characterized in that** the transmission elements (60) are rolling elements which are configured for performing a rolling process between the slide ring carrier (31, 41) and the slide ring in the case of torque transmission.

2. Mechanical seal arrangement according to claim 1, wherein the rolling bodies are cylinders.

3. Mechanical seal arrangement according to claim 1 or 2, wherein a first radius R1 of the cylinder is smaller than a second radius R2 of the first receiving opening (61) in the slide ring carrier, and/or wherein the first radius R1 of the cylinder is smaller than a third radius R3 of the second receiving opening (62) in the slide ring.

4. Mechanical seal arrangement according to claim 3, wherein the second radius R2 is the same size as the third radius R3.

5. Mechanical seal arrangement comprising:
- a mechanical seal (2) having a rotating slide ring (3) having a first sliding surface (30) and a stationary slide ring (4) having a second sliding surface (40), wherein a sealing gap (5) is defined between the sliding surfaces (30, 40),
- a torque device (6) for transmitting a torque between one of the slide rings and a slide ring carrier (31, 41),
- wherein the torque device (6) comprises a plurality of transmission elements (60, 70) which are configured for transmitting torque between the slide ring carrier (31, 41) and the slide ring such that a total torque is divided over the plurality of transmission elements (60, 70),
- wherein the slide ring carrier (31, 41) comprises first receiving openings (61) having a cross-section that is curved and the slide ring comprises second receiving openings (62) which have a cross-section that is curved, and
- wherein the transmission elements (60, 70) are arranged in the first and second receiving opening (61, 62),
**characterized in that** the transmission elements (70) comprise a first body (71), a second body (72) and a connection device (73) which connects the first body (71) to the second body (72), wherein the first body (71) comprises a curved first contact surface for contact to the first receiving opening (61) in the slide ring carrier (31, 41) and the second body (72) comprises a second curved contact surface for contact with the second receiving opening (62) in the slide ring.

6. Mechanical seal arrangement according to claim 5, wherein the connection device comprises one or more rods (73) extending substantially in the radial direction and/or a framework-like connection.

7. Mechanical seal arrangement according to claim 5 or 6, wherein the connection device has greater elasticity than the first body (71) and the second body (72).

8. Mechanical seal arrangement according to any one of claims 5 to 7, wherein the first body (71) and/or the second body (72) is a rod-shaped component having an elliptical cross-section.

9. Mechanical seal arrangement according to any one of the preceding claims, wherein a torque device (6) is arranged both on the rotating slide ring (3) and on the stationary slide ring (4) for transmitting torque from the slide rings to the slide ring carrier (31, 41).

10. Mechanical seal arrangement according to any one of the preceding claims, wherein the torque device (6) is arranged in the first receiving opening (61) and the second receiving opening (62) in such a way that a force introduction point K is at a spacing A from an edge of the first and second receiving opening (61, 62).

11. Mechanical seal arrangement according to any one of the preceding claims, wherein the rotating slide ring (3) and/or the stationary slide ring (4) are produced from ceramic material, and/or wherein the rotating slide ring and the stationary slide ring (4) do not have any coating on the sliding surface (30, 40).

12. Mechanical seal arrangement according to any one of the preceding claims,
- wherein a line contact is present between the transmission elements (60, 70) and the first receiving opening (61) and the second receiving opening (62).

## Revendications

1. Ensemble à garniture mécanique d'étanchéité, comprenant :
- une garniture mécanique d'étanchéité (2) avec un anneau de glissement rotatif (3) avec une première surface de glissement (30) et un anneau de glissement stationnaire (4) avec une deuxième surface de glissement (40), dans lequel un interstice d'étanchéité (5) est défini entre les surfaces de glissement (30, 40),
- un dispositif de couple de rotation (6) pour transmettre un couple de rotation entre l'une des anneaux de glissement et un support de bague de glissement (31, 41),
- dans lequel le dispositif de couple de rotation (6) présente une pluralité d'éléments de transmission (60, 70) qui sont mis au point pour transmettre un couple de rotation entre le support d'anneau de glissement (31, 41) et l'anneau de glissement de manière à répartir un couple de rotation total sur la pluralité d'éléments de transmission (60, 70),
- dans lequel le support d'anneau de glissement (31, 41) comporte des premières ouvertures de réception (61) avec une section transversale en forme d'arc en coupe et l'anneau de glissement présente des deuxièmes ouvertures de réception (62) avec une section transversale en forme d'arc en coupe, et
- dans lequel les éléments de transmission (60, 70) sont disposés dans la première et la deuxième ouverture de réception (61, 62),
**caractérisé en ce que** les éléments de transmission (60) sont des corps de roulement, qui sont mis au point pour exécuter un processus de déroulement entre le support d'anneau de glissement (31, 41) et l'anneau de glissement lors de la transmission de couple de rotation.

2. Ensemble à garniture mécanique d'étanchéité selon la revendication 1, dans lequel les corps de roulement sont des cylindres.

3. Ensemble à garniture mécanique d'étanchéité selon la revendication 1 ou 2, dans lequel un premier rayon R1 du cylindre est inférieur à un deuxième rayon R2 de la première ouverture de réception (61) dans le support d'anneau de glissement et/ou dans lequel le premier rayon R1 du cylindre est inférieur à un troisième rayon R3 de la deuxième ouverture de réception (62) dans l'anneau de glissement.

4. Ensemble à garniture mécanique d'étanchéité selon la revendication 3, dans lequel le deuxième rayon R2 est égal au troisième rayon R3.

5. Ensemble à garniture mécanique d'étanchéité, comprenant :
- une garniture mécanique d'étanchéité (2) avec un anneau de glissement rotatif (3) avec une première surface de glissement (30) et un anneau de glissement stationnaire (4) avec une deuxième surface de glissement (40), dans lequel un interstice d'étanchéité (5) est défini entre les surfaces de glissement (30, 40),
- un dispositif de couple de rotation (6) pour transmettre un couple de rotation entre l'une des anneaux de glissement et un support de bague de glissement (31, 41),
- dans lequel le dispositif de couple de rotation (6) présente une pluralité d'éléments de transmission (60, 70) qui sont mis au point pour transmettre un couple de rotation entre le support d'anneau de glissement (31, 41) et l'anneau de glissement de manière à répartir un couple de rotation total sur la pluralité d'éléments de transmission (60, 70),
- dans lequel le support d'anneau de glissement (31, 41) comporte des premières ouvertures de réception (61) avec une section transversale en forme d'arc en coupe et l'anneau de glissement présente des deuxièmes ouvertures de réception (62) avec une section transversale en forme d'arc en coupe, et
- dans lequel les éléments de transmission (60, 70) sont disposés dans la première et la deuxième ouverture de réception (61, 62),
**caractérisé en ce que** les éléments de transmission (70) comprennent un premier corps (71), un deuxième corps (72) et un dispositif de liaison (73), qui relie le premier corps (71) au deuxième corps (72), dans lequel le premier corps (71) présente une première surface de contact en forme d'arc pour un contact avec la première ouverture de réception (61) dans le support d'anneau de glissement (31, 41) et le deuxième corps (72) présente une deuxième surface de contact en forme d'arc pour un contact avec la deuxième ouverture de réception (62) dans l'anneau de glissement.

6. Ensemble à garniture mécanique d'étanchéité selon la revendication 5, dans lequel le dispositif de liaison comprend une ou plusieurs tiges (73) s'étendant sensiblement dans la direction radiale et/ou une liaison de type treillis.

7. Ensemble à garniture mécanique étanchéité selon la revendication 5 ou 6, dans lequel le dispositif de liaison présente une élasticité supérieure à celle du premier corps (71) et du deuxième corps (72).

8. Ensemble à garniture mécanique d'étanchéité selon l'une quelconque des revendications 5 à 7, dans lequel le premier corps (71) et/ou le deuxième corps (72) sont un composant en forme de tige avec une section transversale elliptique.

9. Ensemble à garniture mécanique d'étanchéité selon l'une quelconque des revendications précédentes, dans lequel un dispositif de couple de rotation (6) est disposé à la fois sur l'anneau de glissement rotatif (3) et sur l'anneau de glissement stationnaire (4) pour la transmission de couple de rotation des anneaux de glissement sur les supports d'anneau de glissement (31, 41).

10. Ensemble à garniture mécanique d'étanchéité selon l'une quelconque des revendications précédentes, dans lequel le dispositif de couple de rotation (6) est disposé dans la première ouverture de réception (61) et la deuxième ouverture de réception (62) de telle manière qu'un point d'application de force K présente une distance A par rapport à un bord de la première et de la deuxième ouverture de réception (61, 62).

11. Ensemble à garniture mécanique d'étanchéité selon l'une quelconque des revendications précédentes, dans lequel l'anneau de glissement rotatif (3) et/ou l'anneau de glissement stationnaire (4) sont fabriqués à partir d'un matériau céramique et/ou dans lequel l'anneau de glissement rotatif et l'anneau de glissement stationnaire (4) ne présentent pas de revêtement sur la surface de glissement (30, 40).

12. Ensemble à garniture mécanique d'étanchéité selon l'une quelconque des revendications précédentes,
- dans lequel un contact de ligne est présent entre les éléments de transmission (60, 70) et la première ouverture de réception (61) et la deuxième ouverture de réception (62).
